# EUROPEAN PATENT APPLICATION

(11) **EP 4 850 797 A1**
(43) Date of publication of application: **09.12.2026**
(21) Application number: 25305793.9
(22) Date of filing: 02.06.2025
(51) Int. Cl.: B01D 71/34, B01D 61/02, B01D 67/00, B01D 69/02

(54) **METHOD FOR PREPARING FLUOROPOLYMER NANOFILTRATION MEMBRANE**

(71) Applicant: ARKEMA France, 92800 Puteaux (FR)
(72) Inventor: FANG, Mingyuan, CHANGSHU, 215522 (CN); BOUTTI, Salima, 92800 PUTEAUX (FR); PENG, Hao, 128825 SINGAPORE (SG); WANG, Rong, 128037 SINGAPORE (SG)
(74) Representative: Bandpay & Greuter

(57) **Abstract**

The present invention relates to a method of making a porous membrane, comprising :
- providing a solution comprising at least one fluoropolymer with a combination of a first solvent and a second solvent, wherein the combination of the first solvent and second solvent has a freezing point higher than or equal to 0°C;
- casting the solution onto a substrate, to form a film; and
- immersing the film in a non-solvent bath at a temperature lower than the freezing point of the combination of the first solvent and second solvent to form the porous membrane.

## Description

### Technical field

The present invention relates to a method of making a porous membrane as described in detail below comprising providing a solution comprising at least one fluoropolymer with a combination of a first solvent and a second solvent, casting the solution to form a film and immersing the film in a non-solvent bath. The invention also relates to a solution comprising a solution comprising at least one fluoropolymer, a first solvent and a second solvent. The invention also refers to a porous membrane obtainable by the method described above as well as to the use of the porous membrane described above for water treatment and/or filtration.

### Technical background

The water field is confronted with a multitude of challenges. One of the major problems is the contamination of water sources with harmful pollutants including viruses, microplastics, and toxic chemicals, which can result in severe health complications, and long-term illnesses. The problem is exacerbated by industrial waste, agricultural runoff, and improper waste disposal, polluting both freshwater and groundwater. In addition, a significant proportion of wastewater treatment facilities are not equipped to handle the afore mentioned pollutants.

Consequently, in a multitude of regions, particularly within developing countries, access to clean and safe drinking water remains a significant challenge, contributing to waterborne diseases and high mortality rates. Moreover, the increasing demand for water due to population growth and climate change-induced water scarcity further stresses available water resources.

Water purification by membrane filtration technologies is crucial in addressing these challenges, as it facilitates the removal of contaminants, enhances water quality, and ensures the safety and reliability of water sources. Therefore, the development of these technologies is of importance, in promoting public health and guarantee a sustainable water supply.

Nanofiltration (NF) or tight ultrafiltration (tight UF) is a membrane-based filtration process that lies between ultrafiltration and reverse osmosis, having pore sizes ranging from 1 to 10 nanometers, to effectively remove divalent and larger monovalent ions, organic molecules, and larger particles from water, while allowing smaller monovalent ions, such as sodium and chloride, to pass through. This renders nanofiltration an optimal method for purifying water in various applications, including drinking water treatment, wastewater recycling, and food processing industries.

Among several materials used for making NF or tight UF membranes, fluoropolymers are commonly used materials for water treatment related applications. Fluoropolymers and, more specifically, polyvinylidene fluoride (PVDF), have excellent mechanical strength, high thermal and chemical resistance while withstanding chlorine disinfection.

However, fluoropolymers including PVDF are hydrophobic materials, leading to poor water permeability and risking to increase membrane fouling.

Over the last decades, several methods such as a non-solvent induced phase separation method (NIPS) or a thermally induced phase separation method (TIPS) have been developed to prepare NF-fluoropolymer based membranes. The NIPS method involves dissolving the polymer in a suitable solvent to form a solution. This solution is then cast onto a flat surface to form a thin film. Once the film is cast, it is exposed to a non-solvent that causes the polymer to phase separate, forming a porous structure. The non-solvent induces a rapid exchange of solvent with water, leading to the solidification of the polymer and the formation of a dense (separation) top layer with a porous (supporting) sublayer. On the other hand, the TIPS method is similar to the NIPS method but involves a phase separation induced by cooling the film after casting. It causes the phase separation of the polymer and separation from the solvent to form a porous structure.

Document CN103623716 relates to a method for producing a PVDF microfiltration membrane having a super-hydrophilic layer formed on the surface.

Document CN106693718 relates to a method for preparing a polymer microporous membrane by supercritical carbon dioxide extraction assisted thermally induced phase separation (TIPS).

Document CN113856479 concerns a preparation method of a fish-gill-like polymer straight membrane having inclined pores.

However, these membranes prepared by NIPS or TIPS methods suffer from low permeances and a wide pore size distribution, which is not precise enough to be used as NF-membranes.

To circumvent these drawbacks, a method called Combination Crystallization and Diffusion (CCD) was developed, involving unidirectional cooling of the polymer cast solution using a solid media to freeze the solvent molecules into crystals, which are leached out in a water bath.

The research article *"*High-Performance PVDF membranes prepared by the combined crystallization and diffusion (CCD) method using a dual-casting technique: a breakthrough for water treatment applications" by V. Shah et al., Energy Environ. Sci. 14, 5491 (2021), relates to the preparation of polyvinylidene fluoride (PVDF) membranes using the non-solvent induced phase separation (NIPS) method combined with the crystallization and diffusion (CCD) method.

However, this method implies a cooling step of the cast film at a temperature of -30°C in order to induce the solidification of the solvent molecules in the polymer. This method is therefore difficult to scale up, necessitates special facilities and requires a high amount of energy.

Within this context, there is a need to provide methods comprising a limited number of steps with minimal steps at elevated or reduced temperatures for making fluoropolymer based porous membranes that are both highly permeable (> 3 LMH.bar⁻¹) and selective (rejection of targeted pollutants higher than 80% and a molecular weight cut-off lower than 10000 Da).

### Summary of the invention

It is therefore the object of this invention to provide a method of making a porous membrane, comprising :
- providing a solution comprising at least one fluoropolymer with a combination of a first solvent and a second solvent, wherein the combination of the first solvent and second solvent has a freezing point higher than or equal to 0°C;
- casting the solution onto a substrate, to form a film; and
- immersing the film in a non-solvent bath at a temperature lower than the freezing point of the combination of the first solvent and second solvent to form the porous membrane.

According to some embodiments, the method does not comprise any step of cooling the substrate prior to immersing the film in a non-solvent bath.

According to some embodiments, the solution comprises from 1 to 60% by weight, preferably from 5 to 40% by weight, even more preferably from 10 to 20% by weight of the fluoropolymer based on the total weight of the solution.

According to some embodiments, the fluoropolymer is a polyvinylidene fluoride homopolymer or a polyvinylidene fluoride copolymer comprising vinylidene fluoride units and units derived from one or more other monomers chosen from vinyl fluoride; trifluoroethylene; chlorotrifluoroethylene; 1,2-difluoroethylene, tetrafluoroethylene; hexafluoropropylene; perfluoro(alkyl vinyl)ethers; perfluoro(1,3-dioxole); perfluoro(2,2-dimethyl-1,3-dioxole); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R'CH₂OCF=CF₂ in which R' is hydrogen or F(CF₂)_{z} and z is 1, 2, 3 or 4; the product of formula R"OCF=CH₂ in which R" is F(CF₂)_{z} and z is 1, 2, 3 or 4; perfluorobutylethylene; 3,3,3-trifluoropropene; and 2-trifluoromethyl-3,3,3-trifluoro-1-propene; preferably the fluoropolymer is a polyvinylidene fluoride homopolymer.

According to some embodiments, the weight ratio of the first solvent to the second solvent is from 9:1 to 3:7, preferably from 9:1 to 4:6, even more preferably from 8:2 to 5:5.

According to some embodiments, the first solvent is chosen among polar aprotic solvents having a freezing point lower than 40°C, preferably the first solvent is chosen among dimethyl sulfoxide, N-methyl-2-pyrrolidone, acetonitrile, dimethylformamide, sulfolane, 3-methylsulfolane, ethyl isopropyl sulfone, or a combination thereof, even more preferably the first solvent is dimethyl sulfoxide.

According to some embodiments, the second solvent is chosen among polar aprotic solvents having a freezing point higher than 40°C, preferably the second solvent is chosen among methylsulfonylmethane, diphenyl sulfone, bisphenol A sulfone, or a combination thereof, even more preferably the second solvent is methylsulfonylmethane.

According to some embodiments, the temperature at which the film is immersed in the non-solvent bath is from -5 to 40°C, preferably from 0 to 30°C.

According to some embodiments, the freezing point of the combination of the first solvent and second solvent is from 0 to 80°C, preferably from 0 to 70°C, more preferably from 10 to 60°C, and even more preferably from 25 to 60°C.

According to some embodiments, the temperature of the solution in the co-casting step is from 40 to 120°C, preferably from 40 to 100°C, even more preferably from 50 to 90°C.

This invention also relates to a solution comprising at least one fluoropolymer, a first solvent and a second solvent, wherein the combination of the first solvent and second solvent has a freezing point higher than or equal to 0°C.

According to some embodiments, the solution comprises from 1 to 60% by weight, preferably from 5 to 40% by weight, even more preferably from 10 to 30% by weight of the fluoropolymer based on the total weight of the solution.

According to some embodiments, the fluoropolymer of the solution is a polyvinylidene fluoride homopolymer or a polyvinylidene fluoride copolymer comprising vinylidene fluoride units and units derived from one or more other monomers chosen from vinyl fluoride; trifluoroethylene; chlorotrifluoroethylene; 1,2-difluoroethylene, tetrafluoroethylene; hexafluoropropylene; perfluoro(alkyl vinyl)ethers; perfluoro(1,3-dioxole); perfluoro(2,2-dimethyl-1,3-dioxole); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R'CH₂OCF=CF₂ in which R' is hydrogen or F(CF₂)_{z} and z is 1, 2, 3 or 4; the product of formula R"OCF=CH₂ in which R" is F(CF₂)_{z} and z is 1, 2, 3 or 4; perfluorobutylethylene; 3,3,3-trifluoropropene; and 2-trifluoromethyl-3,3,3-trifluoro-1-propene; preferably the fluoropolymer is a polyvinylidene fluoride homopolymer.

According to some embodiments, the weight ratio of the first solvent to the second solvent is from 9:1 to 3:7, preferably from 9:1 to 4:6, even more preferably from 8:2 to 5:5.

According to some embodiments, the first solvent of the solution is chosen among polar aprotic solvents having a freezing point lower than 40°C, preferably the first solvent is chosen among dimethyl sulfoxide, N-methyl-2-pyrrolidone, acetonitrile, dimethylformamide, sulfolane, 3-methylsulfolane, ethyl isopropyl sulfone, or a combination thereof, even more preferably the first solvent is dimethyl sulfoxide.

According to some embodiments, the second solvent of the solution is chosen among polar aprotic solvents having a freezing temperature higher than 40°C, preferably the second solvent is chosen among methylsulfonylmethane, diphenyl sulfone, bisphenol A sulfone, or a combination thereof, even more preferably the second solvent is methylsulfonylmethane.

The invention also refers to a porous membrane obtainable by the method described above.

The invention also relates to the use of the porous membrane described above for water treatment.

The present invention makes it possible to address the need mentioned above.

The method affords the preparation of porous membranes exhibiting high permeability (for example exceeding 3 LMH.bar⁻¹) and high selectivity (for example with a rejection of at least one of the targeted pollutants higher than 80% and a molecular weight cut-off lower than 10000 Da). Advantageously, the membranes have a smaller surface pore size and/or fewer defects.

In some embodiments, the method enables the restriction of the number of steps for making the porous membranes and, more specifically, owing to a fluoropolymer solution having a relatively high freezing point in order to more easily induce crystallization of the solvent to form the porous structure of the fluoropolymer membrane in the non-solvent. In particular, the method advantageously does not require an intermediate cooling step at a temperature of e.g. -30°C.

### Brief description of the drawings

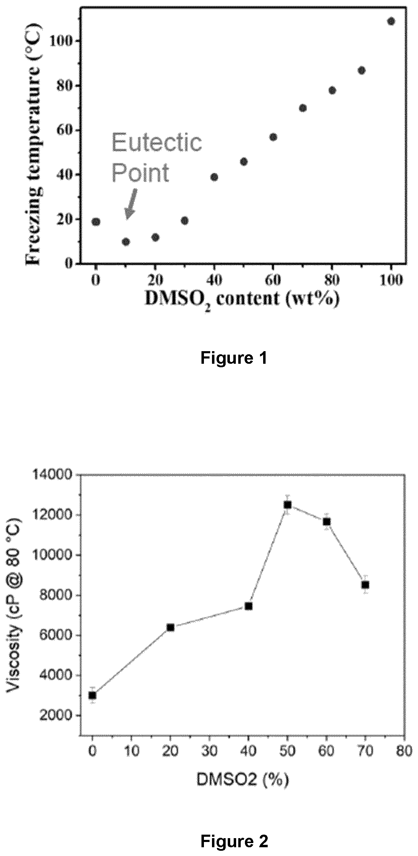

Figure 1 is a graph showing the evolution of the freezing point (°C) of a PVDF solution at a concentration of 18% by weight in a mixture of dimethylsulfoxide and methylsulfonylmethane as a function of the mass concentration (% by weight) of the methylsulfonylmethane in the solution relative to the combination of dimethylsulfoxide and methylsulfonylmethane.
Figure 2 is a graph showing the viscosity (cP) measured at 80°C of a PVDF solution at a concentration of 18% by weight in a mixture of dimethylsulfoxide and methylsulfonylmethane as a function of the mass concentration (% by weight) of the methylsulfonylmethane in the mixture relative to the combination of dimethylsulfoxide and methylsulfonylmethane.

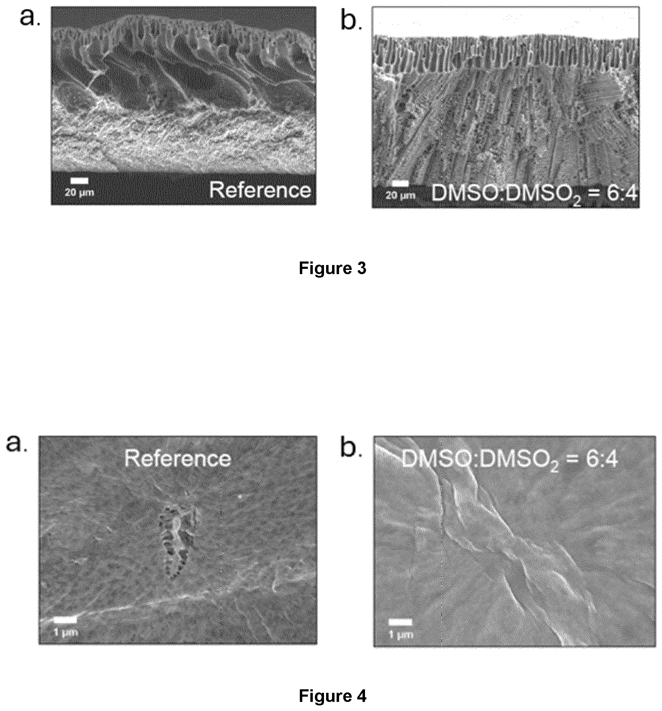

Figure 3 shows Scanning Electron Microscopy images of the cross-section of several PVDF porous membranes : a) a comparative sample (sample C), b) a sample according to the invention (sample E) prepared from a PVDF solution at a concentration of 18% by weight having a DMSO:DMSO₂ solvent weight ratio of 6:4.
Figure 4 shows Scanning Electron Microscopy images of the separation parts of the PVDF porous membranes described in Figure 3 (comparative sample C and sample E according to the invention).

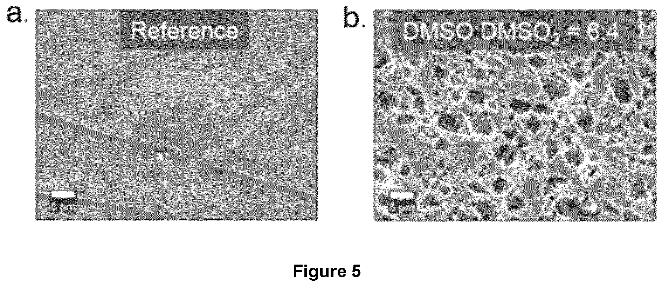

Figure 5 shows Scanning Electron Microscopy images of the bottom support part of the PVDF porous membranes described in Figure 3 (comparative sample C and sample E according to the invention).

### Detailed description

The invention will now be described in more detail without limitation in the following description.

### Method

The invention relates to a method of making a porous membrane, comprising :
- providing a solution comprising at least one fluoropolymer with a combination of a first solvent and a second solvent, , wherein the first solvent has a first freezing point, the second solvent has a second freezing point (preferably higher than the first freezing point), and the combination of the first solvent and second solvent has a third freezing point higher than 0°C;
- casting the solution onto a substrate, to form a film; and
- immersing the film in a non-solvent bath at a temperature lower than the third freezing point to form the porous membrane.

The freezing point of a solvent (or of a combination of solvents) may be measured as follows: the solvent or the solvent resulting from the combination of solvents is cooled down starting from a temperature below its boiling point using a recirculation chiller. The cooling rate is approximately 5°C/min and then 1°C/min as the freezing point of the solvent is approached. The freezing point corresponds to the temperature at which the solvent (or the solvent resulting from the combination of solvents) transitions from the liquid phase to the solid phase under standard atmospheric pressure (1 atm).

According to some embodiments, the method does not comprise any step of cooling the substrate prior to immersing the film in a non-solvent bath.

According to some embodiments, the solution comprises from 1 to 60% by weight, preferably from 5 to 40% by weight, even more preferably from 10 to 20% by weight of the fluoropolymer based on the total weight of the solution.

According to some embodiments, the fluoropolymer is a polyvinylidene fluoride homopolymer or a polyvinylidene fluoride copolymer comprising vinylidene fluoride units and units derived from one or more other monomers chosen from vinyl fluoride (VF); trifluoroethylene (TrFE); chlorotrifluoroethylene (CTFE); 1,2-difluoroethylene (DFE); tetrafluoroethylene (TFE); hexafluoropropylene (HFP); perfluoro(alkyl vinyl)ethers (PFAVEs); perfluoro(1,3-dioxole); perfluoro(2,2-dimethyl-1,3-dioxole); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R'CH₂OCF=CF₂ in which R' is hydrogen or F(CF₂)_{z} and z is 1, 2, 3 or 4; the product of formula R"OCF=CH₂ in which R" is F(CF₂)_{z} and z is 1, 2, 3 or 4; perfluorobutylethylene; 3,3,3-trifluoropropene; and 2-trifluoromethyl-3,3,3-trifluoro-1-propene; preferably the fluoropolymer is a polyvinylidene fluoride homopolymer.

According to some embodiments, the melt viscosity of the fluoropolymer is from 1000 to 100000 Pa.s, preferably from 2000 to 75000 Pa.s, more preferably from 3000 to 50000 Pa.s and, even more preferably from 4000 to 40000 Pa.s. The viscosity of the fluoropolymer is measured at 230°C and 100 s⁻¹ according to standard ASTM D3835.

According to some embodiments, the melting temperature of the fluoropolymer is from 70 to 230 °C, preferably from 100 to 200 °C, and more preferably from 120 to 170 °C. The melting temperature of the fluoropolymer is measured at 10°C/min according to standard ISO 11357-1/-3.

According to some embodiments, the polyvinylidene fluoride copolymer can be a statistical copolymer, an alternating copolymer or a block copolymer.

The composition of the copolymer can be determined for example based on ¹⁹F NMR spectroscopy and ¹H-NMR spectroscopy.

According to some embodiments, the polyvinylidene fluoride copolymer comprises from 1 to 99 mol.%, preferably from 20 to 99 mol.% and even more preferably from 50 to 99 mol.% of the vinylidene fluoride units.

According to some embodiments, the polyvinylidene fluoride copolymer is chosen among Poly(VDF-co-VF), Poly(VDF-co-TFE), Poly(VDF-co-CTFE), Poly(VDF-co-DFE), Poly(VDF-co-TrFE), Poly(VDF-co-HFP), or Poly(VDF-co-PFAVE).

According to some embodiments, the fluoropolymer of the solution may be a polyvinylidene fluoride copolymer comprising vinylidene fluoride units (VDF) and units derived from one or more other non-fluorinated monomers preferably chosen among acrylonitrile (AN), hydroxyethyl methacrylate (HEMA), butyl methacrylate (BMA), ethyl methacrylate (EMA), methyl methacrylate (MMA), vinyl acetate (VA), 2-hydroxypropyl methacrylate (HPMA), trimethylolpropane triacrylate (TMPTA), or styrene (S).

According to some embodiments, the polyvinylidene fluoride copolymer comprises:
- from 1 to 99 mol.%, preferably from 20 to 99 mol.% and even more preferably from 50 to 99 mol.% of the vinylidene fluoride units;
- from 1 to 99 mol.%, preferably from 1 to 80 mol.% and even more preferably from 1 to 50 mol.% of the units derived from the non-fluorinated monomers.

According to some embodiments, the polyvinylidene fluoride copolymer can be a statistical copolymer, an alternating copolymer or a block copolymer.

According to some embodiments, the polyvinylidene fluoride copolymer may be chosen among Poly(VDF-co-AN), Poly(VDF-co-HEMA), Poly(VDF-co-BMA), Poly(VDF-co-EMA), Poly(VDF-co-MMA), Poly(VDF-co-VA), Poly(VDF-co-HPMA), Poly(VDF-co-TMPTA), or Poly(VDF-co-PS).

Alternatively, the polyvinylidene fluoride copolymer may comprise VDF units, one or more units derived from fluorinated monomers other than VDF, and one or more units derived from non-fluorinated monomers as described above.

According to some embodiments, the fluoropolymer may be functionalized by molecules containing carboxylic acid groups including but not limited to methacrylic acid, maleic acid, fumaric acid, cinnamic acid, itaconic acid, crotonic acid, or acrylic acid.

In a preferred embodiment, the polyvinylidene fluoride homopolymer or the Poly(VDF-co-HFP) is functionalized by one or more molecules containing a carboxylic acid group. Preferably the molecule containing a carboxylic acid group is acrylic acid.

According to some embodiments, the solution comprises from 40 to 99% by weight, preferably from 60 to 95% by weight, even more preferably from 80 to 90% by weight of a mixture of the first solvent and the second solvent based on the total weight of the solution.

According to some embodiments, the weight ratio of the first solvent to the second solvent is from 9:1 to 3:7, preferably from 9:1 to 4:6, even more preferably from 8:2 to 5:5.This weight ratio may range from 9:1 to 8:2, or from 8:2 to 7:3, or from 7:3 to 6:4, or from 6:4 to 5:5, or from 5:5 to 4:6, or from 4:6 to 3:7.

The first solvent, the second solvent, and/or the mixture of the first solvent and the second solvent may crystallize within the film formed by casting the solution onto the substrate.

According to some embodiments, the first solvent and/or the second solvent is miscible in the non-solvent, preferably the first solvent is miscible in water.

According to some embodiments, the first solvent is chosen among polar aprotic solvents having a freezing point lower than 40°C.

By *"polar"* is meant a molecule that has a dipole moment equal to or higher than 1.5 D at 25°C, and preferably equal to or higher than 3 D, or 4 D, or 4.5 D, or 5 D at 25°C. The dipole moment can be measured by using a dipole meter and by interpretation of the results using the Debey equation.

*By "aprotic"* is meant a molecule which does not contain any acidic hydrogen and thus does not act as a hydrogen bond donor. In particular, the aprotic molecule is free of -OH, -NH, -SH, and -PH groups.

Preferably the first solvent is chosen among dimethyl sulfoxide, N-methyl-2-pyrrolidone, acetonitrile, dimethylformamide, sulfolane, 3-methylsulfolane, ethyl isopropyl sulfone, or a combination thereof, even more preferably the first solvent is dimethyl sulfoxide.

According to some embodiments, the second solvent is chosen among polar aprotic solvents having a freezing point higher than 0°C, preferably the second solvent is chosen among methylsulfonylmethane, diphenyl sulfone, bisphenol A sulfone, or a combination thereof, even more preferably the second solvent is methylsulfonylmethane.

In a preferred embodiment, the first solvent is dimethyl sulfoxide and the second solvent is methylsulfonylmethane.

The solution may be prepared by contacting the at least one fluoropolymer with the combination of a first solvent and a second solvent. The contacting step may be carried out at a first temperature.

According to some embodiments, the first temperature is from 80 to 200°C, preferably from 85 to 150°C, even more preferably from 90 to 120°C.

The temperature at which the film is immersed in the non-solvent bath may be designated as a second temperature.

The second temperature may be from -5 to 40°C, preferably from 0 to 30°C.

In a preferred embodiment, the first temperature is from 90 to 120°C and the second temperature is from 0 to 30°C.

According to some embodiments, the third freezing point is from 0 to 80°C, preferably from 0 to 70°C, more preferably from 10 to 60°C, and even more preferably from 25 to 60°C.

According to a preferred embodiment, the third freezing point is higher than the first freezing point. Having a relatively high third freezing point may be advantageous in terms of ease of manufacturing the membrane.

According to some embodiments, the solution viscosity at 80°C is from 1000 to 40 000 cP, preferably from 2000 to 30000 cP, even more preferably from 4000 to 20 000 cP. The viscosity can be evaluated using a rational viscometer at 20 s⁻¹ speed.

According to some embodiments, the solution may be heated and/or stirred.

According to some embodiments, the solution is at a temperature from 50 to 140°C, preferably from 75 to 130°C, more preferably from 100 to 130°C.

According to some embodiments, the solution is heated and/or stirred from 0.5 to 12h, preferably from 2 to 11h, more preferably from 4 to 10h, and even more preferably from 5 to 9h.

According to some embodiments, an organic pore-forming agent is added at the contacting step, preferably the organic pore-forming agent is chosen among polyvinylpyrrolidone, polyethylene glycol, methyl cellulose, carboxy methyl cellulose, polyvinyl alcohol, polyacrylic acid, or polyacrylate.

**The** organic pore-forming agent may be removed from the membrane when the membrane is immersed in a non-solvent bath, as described in more detail below.

According to some embodiments, the solution comprises from 0.01 to 2% by weight, preferably from 0.05 to 6% by weight, more preferably from 0.075 to 5.5% by weight, and even more preferably from 0.1 to 5% by weight of the organic pore-forming agent based on the total weight of the solution. **The** solution may comprise from 0.01 to 0.5% by weight, or from 0.5 to 1% by weight, or from 1 to 1.5% by weight, or from 1.5 to 2% by weight, or from 2 to 2.5% by weight, or from 2.5 to 3% by weight, or from 3 to 3.5% by weight, or from 3.5 to 4% by weight, or from 4 to 4.5% by weight, or from 4.5 to 5% by weight, or from 5 to 5.5% by weight, or from 5.5 to 6% by weight of the organic pore-forming agent.

Preferably, the organic pore-forming agent is polyvinylpyrrolidone or polyethylene glycol and, even more preferably, the organic pore-forming agent is polyvinylpyrrolidone.

Preferably, the polyvinylpyrrolidone has a weight average molar mass from 2000 to 60000 g.mol⁻¹, preferably from 4000 to 40000 g.mol⁻¹, more preferably from 6000 to 25000 g.mol⁻¹ and even more preferably from 8000 to 15000 g.mol⁻¹. The weight average molar mass may be determined by size-exclusion chromatography (SEC) or nuclear magnetic resonance (NMR) spectroscopy.

Preferably, the polyethylene glycol has a weight average molar mass from 4000 to 50000 g.mol⁻¹, preferably from 8000 to 40000 g.mol⁻¹, more preferably from 8000 to 25000 g.mol⁻¹ and even more preferably from 8000 to 15000 g.mol⁻¹. The weight average molar mass may be determined by size-exclusion chromatography (SEC) or nuclear magnetic resonance (NMR) spectroscopy.

According to some embodiments, an inorganic salt is added at the contacting step, preferably the at least one inorganic salt is chosen among lithium chloride, lithium bromide, sodium chloride, potassium chloride, or a combination thereof, and even more preferably the at least one inorganic salt is lithium chloride. The inorganic salt can act as a fluoropolymer solubility regulator, a solvent/non-solvent exchange accelerator and a viscosity regulator.

According to some embodiments, the solution comprises from 0.1 to 6% by weight, preferably from 0.5 to 5% by weight, even more preferably from 1 to 3% by weight of the inorganic salt based on the total weight of the solution.

In a preferred embodiment, the solution comprises or consists of at least one fluoropolymer, dimethyl sulfoxide, methylsulfonylmethane and optionally a pore-forming agent, wherein dimethyl sulfoxide has a first freezing point from 18 to 19.5°C, methylsulfonylmethane has a second freezing point from 108 to 110°C, and the combination of dimethyl sulfoxide and methylsulfonylmethane preferably has a third freezing point higher than the first freezing point from 18 to 19.5°C.

In a preferred embodiment, the solution comprises or consists of at least one polyvinylidene fluoride homopolymer or copolymer, dimethyl sulfoxide, methylsulfonylmethane and optionally a pore-forming agent, wherein dimethyl sulfoxide has a first freezing point from 18 to 19.5°C, methylsulfonylmethane has a second freezing point from 108 to 110°C, and the combination of dimethyl sulfoxide and methylsulfonylmethane preferably has a third freezing point higher than the first freezing point from 18 to 19.5°C.

According to some embodiments, the solution is degassed prior to casting.

According to some embodiments, the solution is degassed at a temperature from 40 to 120°C, preferably from 40 to 100°C, even more preferably from 50 to 90°C.

The solution may be degassed from 0.5 to 24h or from 0.5 to 12h, preferably from 1 to 8h, and more preferably from 2 to 6h.

According to some embodiments, the temperature of the solution in the casting step is from 30 to 100°C, preferably from 30 to 80°C, even more preferably from 30 to 60°C.

According to some embodiments, the substrate on which the solution is cast is a metal, e.g. aluminum, or glass plate.

According to some embodiments, the film has a thickness from 100 to 1000 µm, preferably from 200 to 800 µm, and even more preferably from 300 to 700 µm at the casting step.

According to some embodiments, the immersion time of the film is from 5 to 24 hours, preferably from 8 to 20 hours, more preferably from 10 to 18 hours.

According to some embodiments, the non-solvent in the bath is changed from 1 to 5 times, preferably from 1 to 3 times, and even more preferably from 1 to 2 times.

A non-solvent may be a liquid that is miscible with the first solvent and the second solvent used to dissolve the fluoropolymer, but in which the fluoropolymer itself is not soluble.

According to some embodiments, the non-solvent in the bath is an alcohol, preferably chosen among methanol, ethanol, propanol, butanol, pentanol, hexanol, glycerol, or a mixture thereof.

According to some embodiments, the non-solvent bath is a water bath. By *"water bath"* is meant either substantially pure water or an aqueous solution.

The temperature of the water bath may be adjusted by adding water ice, antifreeze agents such as ethanol or isopropyl alcohol, or a glycol such as ethylene glycol or propylene glycol.

According to some embodiments, the obtained porous membrane comprises less than 2% by weight, preferably less than 1% by weight, more preferably less than 0.5% by weight, and even more preferably approximately 0% by weight of the total of the first solvent and the second solvent, based on the total weight of the porous membrane.

According to one embodiment, the method of making a porous membrane comprises, or consists of:
- providing a solution comprising at least one polyvinylidene fluoride with a combination of a first solvent, preferably an apolar protic solvent, more preferably chosen among dimethyl sulfoxide, N-methyl-2-pyrrolidone, acetonitrile, dimethylformamide, sulfolane, 3-methylsulfolane, ethyl isopropyl sulfone, or a combination thereof and a second solvent, preferably an apolar protic solvent, and more preferably methylsulfonylmethane, diphenyl sulfone, bisphenol A sulfone, or a combination thereof, at a first temperature, preferably from 50 to 120°C, wherein the first solvent has a first freezing point, the second solvent has a second freezing point higher than the first freezing point, and the combination of the first solvent and second solvent has a third freezing point higher than or equal to 0°C;
- casting the solution onto a substrate, to form a film, preferably having a thickness from 100 to 1000 µm; and
- immersing the film in a water bath at a second temperature, preferably from 0 to 15°C, lower than the third freezing point to form the porous membrane;
- optionally, drying the film.

According to one embodiment, the method of making a porous membrane comprises, or consists of:
- providing a solution comprising at least one polyvinylidene fluoride with a combination of a first solvent, preferably an apolar protic solvent, more preferably chosen among dimethyl sulfoxide, N-methyl-2-pyrrolidone, acetonitrile, dimethylformamide, sulfolane, 3-methylsulfolane, ethyl isopropyl sulfone, or a combination thereof and a second solvent, preferably an apolar protic solvent, and more preferably methylsulfonylmethane, diphenyl sulfone, bisphenol A sulfone, or a combination thereof, at a first temperature, preferably from 50 to 120°C, wherein the first solvent has a first freezing point, the second solvent has a second freezing point higher than the first freezing point, and the combination of the first solvent and second solvent has a third freezing point higher than the first freezing point;
- casting the solution onto a substrate, to form a film, preferably having a thickness from 100 to 1000 µm; and
- immersing the film in a water bath at a second temperature, preferably from 0 to 15°C, lower than the third freezing point to form the porous membrane;
- optionally, drying the film.

According to one embodiment, the method of making a porous membrane comprises, or consists of:
- providing a solution comprising at least one polyvinylidene fluoride with a combination of dimethyl sulfoxide and methylsulfonylmethane, at a first temperature, preferably from 50 to 120°C, wherein dimethyl sulfoxide has a first freezing point from 18 to 19.5°C, methylsulfonylmethane has a second freezing point from 108 to 110°C, and the combination of dimethyl sulfoxide and methylsulfonylmethane has a third freezing point higher than or equal to 0°C;
- casting the solution onto a substrate, to form a film, preferably having a thickness from 100 to 1000 µm;
- immersing the film in a water bath at a second temperature, preferably from 0 to 15°C, lower than the third freezing point to form the porous membrane; and
- optionally, drying the film.

### Porous membrane

The invention also refers to a porous membrane obtainable by the method described above.

According to some embodiments, the porous membrane has a thickness from 70 to 300 µm, preferably from 80 to 250 µm, and even more preferably from 90 to 230 µm. The thickness may be evaluated, for example, using scanning electron microscopy (SEM) or thickness gauge.

The thickness of the porous membrane may be referred to as the distance between its two main surfaces.

The porous membrane may be an asymmetric membrane having a nonuniform structure across its cross-section, comprising a selective top part and a bottom support part. These two parts may have different configurations, and in particular different pore sizes, pore shapes and/or pore densities. The top part may provide a selective barrier for separation while the bottom part may offer mechanical support and allow fluid transport with minimal resistance.

According to some embodiments, the thickness of the top part is lower than the thickness of the bottom part.

Preferably, the porous membrane has a pore size ranging from 1 to 10 nm, more preferably from 2 to 9 nm, and even more preferably from 3 to 8 nm. The pore size may be determined by the equivalent polyethylene glycol hydrodynamic volume corresponding to the molecular weight cut-off as explained in more details below.

According to some embodiments, the porous membrane has substantially unidirectional, preferably unidirectional pores. The presence and shape of the pores may be determined by scanning electron microscopy.

According to some embodiments, the substantially unidirectional pores or the unidirectional pores are along the direction of the thickness of the porous membrane.

Substantially unidirectional or unidirectional pores may be anisotropic and may correspond to channel-like pores. Substantially unidirectional or unidirectional pores may be formed during phase separation due to the non-solvent intrusion.

Preferably, the pores of the porous membrane have an elongated shape.

Preferably, the pores of the porous membrane are inter-connected.

Inter-connected pores may be a network of connected pores. These pores may be physically linked to allow the pathway of a fluid (e.g. water). These pores may be connected by interconnections (e.g. throats, channels, bridges).

According to some embodiments, interconnected pores may form a continuous three-dimensional network, such as a sponge-like architecture.

According to some embodiments, interconnected pores may comprise pores linked by opening porosity.

According to some embodiments, the porous membrane has a water permeance of 2 LMH.bar⁻¹ or more, preferably 4 LMH.bar⁻¹ or more, more preferably 6 LMH.bar⁻¹ or more, and even more preferably 9 LMH.bar⁻¹ or more. Water permeance may be determined with the following method: pure water at temperature of 25°C is filtered through an effective membrane area (A) (in m²) of the porous membrane under a pressure (P) of about 1 to 4 bar pressure. The volume of water (in liters) is recorded every two minutes (with pressure stabilization every two minutes). The permeance (P) is calculated according to the following formula : $P = \frac{60 V}{2 PA}$

According to some embodiments, the porous membrane has a rose Bengal dye rejection from 80 to 100%, preferably from 83 to 100%, more preferably from 86 to 100%, even more preferably from 88 to 100%. Rose Bengal dye rejection may be determined with the following method: an aqueous solution of rose Bengal dye having an initial concentration of dye (C₀) is filtered through the porous membrane. The resulting aqueous solution has a rose Bengal concentration after filtration (C_{f}) determined by UV-visible spectroscopy. The dye rejection (R) is calculated according to the following formula : $R = \frac{{C}_{0} - {C}_{f}}{{C}_{0}}$ According to some embodiments, the porous membrane has a methyl orange dye rejection from 80 to 100%, preferably from 83 to 100%, more preferably from 86 to 100%, even more preferably from 88 to 100%. Methyl orange dye rejection may be determined with the following method: an aqueous solution of methyl orange dye having an initial concentration of dye (C₀) is filtered through the porous membrane. The resulting aqueous solution has a rose Bengal concentration after filtration (C_{f}) determined by UV-visible spectroscopy. The dye rejection (R) is calculated according to the following formula : $R = \frac{{C}_{0} - {C}_{f}}{{C}_{0}}$

According to some embodiments, the porous membrane has a molecular weight cut-off of 10000 Da or less, preferably 8500 Da or less, more preferably 7500 Da or less, more preferably 5000 Da or less, and even more preferably 4000 Da or less. The molecular weight cut-off (MWCO) may be determined with the following method: a series of PEG standards with known molecular weights are filtered through the membrane. The MWCO is identified as the lowest PEG molecular weight (in Da) at which the membrane retains approximately 90% of the PEG in the feed filtered through the membrane (as determined by Gel Permeation Chromatography).

### Use

The invention also relates to the use of the porous membrane described above for water treatment.

The water to be treated may be groundwater; surface water such as rivers, lakes and reservoirs; brackish water; wastewater such as municipal or industrial wastewater; desalinated seawater; rainwater; contaminated water such as agricultural runoff; industrial process water.

Water treatment may include (but without being limited to) the removal of organic contaminants such as dye, antibiotics, humic substances, pesticides, micropollutants or volatile organic compounds, the removal of microorganisms such as bacteria, viruses or protozoa.

### Examples

The following examples illustrate the invention without limiting it. In all of the examples below, PVDF is a fluorinated homopolymer sold under the trademark Kynar^{®}761A (as powder) provided by Arkema France; DMSO is dimethyl sulfoxide, a polar aprotic solvent having a freezing point of about 18.5°C; DMSO₂ is methylsulfonylmethane, a polar aprotic solvent having a freezing point of 109°C; and PVP is polyvinylpyrrolidone, an organic pore-forming agent having a weight average molar mass of about 10000 g.mol⁻¹.

### Example 1: Preparation of comparative solutions

Several comparative solutions (A to C) were prepared by dissolving PVDF and dimethyl sulfoxide (DMSO) under stirring at 115°C for 6 to 8 hours (Table 1). The solutions (A to C) were degassed at a temperature from 50 to 80°C overnight. The content of each component in Table 1 is expressed as a percentage by weight.

**Table 1**

| Samples | A (comp) | B (comp) | C (comp) |
|---|---|---|---|
| PVDF | 22 | 20 | 18 |
| DMSO | 78 | 80 | 82 |

### Example 2: Preparation of comparative porous membranes

The comparative solutions (A to C) at a temperature from 40°C to 60°C were cast on plates using a casting blade to form a film. The thickness of the film was about 500 µm. The plates were then individually immersed in an ice-water bath for 12 hours to form the porous membranes. The water in each bath was changed twice, with a 60-minute interval between the changes. The porous membranes (A to C) were then left to dry in the air.

### Example 3: Preparation of solutions based on a combination of solvents

Several solutions (D to J) were prepared by dissolving PVDF and optionally an organic pore forming agent into dimethyl sulfoxide (DMSO) and methylsulfonylmethane (DMSO₂) under stirring at 115°C for 6 to 8 hours (Table 2). The solutions (D to J) were degassed at a temperature from 50 to 80°C overnight. The content of each component in Table 2 is expressed as a percentage by weight.

**Table 2**

| Samples | D (ref) | E (inv) | F (inv) | G (inv) | H (inv) | I (inv) | J (inv) |
|---|---|---|---|---|---|---|---|
| PVDF | 18 | 18 | 18 | 18 | 18 | 18 | 18 |
| DMSO | 65.6 | 49.2 | 45.1 | 41 | 49.2 | 49.1 | 32.8 |
| DMSO₂ | 16.4 | 32.8 | 36.9 | 41 | 32.7 | 32.6 | 49.2 |
| PVP | - | - | - | - | 0.1 | 0.3 | - |

The freezing point of the DMSO/DMSO₂ mixture in each solution (D to J) is expressed in Table 3.

**Table 3**

| Samples | D (inv) | E (inv) | F (inv) | G (inv) | H (inv) | I (inv) | J (inv) |
|---|---|---|---|---|---|---|---|
| Freezing point (°C) | 15 | 40 | 43 | 48 | 40 | 40 | 54 |

Samples D to J are according to the invention.

### Example 4: Preparation of porous membranes based on a combination of solvents.

Solutions (D to J) at a temperature from 40°C to 60°C were individually cast on plates using a casting blade to form a film. The thickness of the film was about 500 µm. The plates were then individually immersed in an ice-water bath for 12 hours to form the porous membranes. The water in each bath was changed twice, with a 60-minute interval between the changes.

### Example 5: Porous membranes used for water purification

The membranes described above were tested and characterized according to the following methods as described above: water permeance, rose Bengal dye rejection, methyl orange dye rejection, molecular weight cut-off (MWCO), pore size.

**Table 4**

| Samples | A (comp) | B (comp) | C (comp) |
|---|---|---|---|
| Permeance (LMH.bar⁻¹) | 4 | 8 | 52 |
| Rose Bengal rejection (%) | 83 | 70 | 27 |
| Methyl orange rejection (%) | 0 | 0 | 0 |
| MWCO (Da) | < 4000 | < 4000 | > 30000 |

**Table 5**

| Samples | D (inv) | E (inv) | F (inv) | G (inv) | H (inv) | I (inv) | J (inv) |
|---|---|---|---|---|---|---|---|
| Permeance (LMH.bar⁻¹) | 35 | 13 | 10 | 4 | 60 | 70 | 5 |
| Rose Bengal rejection (%) | 88 | 97 | 98 | 99 | 95 | 92 | 90 |
| Methyl orange rejection (%) | 0 | 83 | 84 | 87 | 85 | 81 | 0 |
| MWCO (Da) | < 10000 | < 3900 | < 3400 | < 2500 | < 7500 | < 8100 | < 10000 |
| Pore size (nm) | 4.5 | 2.54 | 2.13 | 1.68 | 3.65 | 3.89 | 4.5 |

The comparative porous membranes A to C have a water permeance higher than 3 LMHB. However, these reference samples have a Molecular Weight Cut-Off (MWCO) higher than 10000 Da and/or a dye rejection (rose Bengal and/or methyl orange) lower than 80%. Therefore, the reference samples A to C have a lack of selectivity.

The porous membranes according to the invention have a water permeability higher than 3 LMHB, a MWCO greater than 10000 Da and a dye rejection above 80%. In other words, the porous membranes according to the invention have both high permeability and good selectivity.

Comparative porous membranes (A to C) exhibit lower performance compared to the porous membranes according to the invention (D to J and K to N).

### Example 6: Freezing point of a PVDF solution

Figure 1 shows the evolution of the freezing point (°C) of a PVDF solution at a concentration of 18% by weight in a mixture of dimethylsulfoxide and methylsulfonylmethane as a function of the mass concentration (% by weight) of the methylsulfonylmethane (DMSO₂) in the solution relative to the combination of dimethylsulfoxide (DMSO) and methylsulfonylmethane (DMSO₂). The freezing point of the PVDF solution is above the freezing point of DMSO if the DMSO:DMSO₂ ratio is greater than approximately 7:3.

### Example 7: Viscosity of a PVDF solution

Figure 2 shows the evolution of the viscosity of a PVDF solution at a concentration of 18% by weight in a mixture of dimethylsulfoxide and methylsulfonylmethane as a function of the mass concentration (% by weight) of the methylsulfonylmethane (DMSO₂) in the solution relative to the combination of dimethylsulfoxide (DMSO) and methylsulfonylmethane (DMSO₂). The viscosity is from 3000 to 13000 cP. A relatively higher viscosity is advantageous.

### Example 8: SEM observation of different porous membrane samples

Figure 3 (a and b) shows the cross-section of the porous membrane samples C (comparative) and E (according to the invention). The comparative sample C (3.a) has macropores (i.e. macrovoids) and channels obtained by crystallization and diffusion (CCD) method while the sample according to the invention E (3.b), show elongated and unidirectional pores as well as CCD channels.

Figure 4 (a and b) shows the top selective part of porous membrane samples C (comparative) and E (according to the invention). The comparative sample C (4.a) shows evidence of PVDF crystallization defects. In contrast, the sample according to the invention E (4.b) shows no such defects wherein elongated and unidirectional pores are identifiable.

Figure 5 (a and b) shows the bottom support part of porous membrane samples C (comparative) and E (according to the invention). Both samples have macropores on their surface but the sample E has the largest macropores, thereby facilitating water permeation.

## Claims

1. A method of making a porous membrane, comprising :
- providing a solution comprising at least one fluoropolymer with a combination of a first solvent and a second solvent, wherein the combination of the first solvent and second solvent has a freezing point higher than or equal to 0°C;
- casting the solution onto a substrate, to form a film; and
- immersing the film in a non-solvent bath at a temperature lower than the freezing point of the combination of the first solvent and second solvent to form the porous membrane.

2. A method according to claim 1, which does not comprise any step of cooling the substrate prior to immersing the film in a non-solvent bath.

3. A method according to any one of claims 1 and 2, wherein the solution comprises from 1 to 60% by weight, preferably from 5 to 40% by weight, even more preferably from 10 to 20% by weight of the fluoropolymer based on the total weight of the solution.

4. A method according to any one of claims 1 to 3, wherein the fluoropolymer is a polyvinylidene fluoride homopolymer or a polyvinylidene fluoride copolymer comprising vinylidene fluoride units and units derived from one or more other monomers chosen from vinyl fluoride; trifluoroethylene; chlorotrifluoroethylene; 1,2-difluoroethylene, tetrafluoroethylene; hexafluoropropylene; perfluoro(alkyl vinyl)ethers; perfluoro(1,3-dioxole); perfluoro(2,2-dimethyl-1,3-dioxole); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R'CH₂OCF=CF₂ in which R' is hydrogen or F(CF₂)_{z} and z is 1, 2, 3 or 4; the product of formula R"OCF=CH₂ in which R" is F(CF₂)_{z} and z is 1, 2, 3 or 4; perfluorobutylethylene; 3,3,3-trifluoropropene; and 2-trifluoromethyl-3,3,3-trifluoro-1-propene; preferably the fluoropolymer is a polyvinylidene fluoride homopolymer.

5. A method according to any one of claims 1 to 4, wherein the weight ratio of the first solvent to the second solvent is from 9:1 to 3:7, preferably from 9:1 to 4:6, even more preferably from 8:2 to 5:5.

6. A method according to any one of claims 1 to 5, wherein the first solvent is chosen among polar aprotic solvents having a freezing point lower than 40°C, preferably the first solvent is chosen among dimethyl sulfoxide, N-methyl-2-pyrrolidone, acetonitrile, dimethylformamide, sulfolane, 3-methylsulfolane, ethyl isopropyl sulfone, or a combination thereof, even more preferably the first solvent is dimethyl sulfoxide.

7. A method according to any one of claims 1 to 6, wherein the second solvent is chosen among polar aprotic solvents having a freezing point higher than 40°C, preferably the second solvent is chosen among methylsulfonylmethane, diphenyl sulfone, bisphenol A sulfone, or a combination thereof, even more preferably the second solvent is methylsulfonylmethane.

8. A method according to any one of claims 1 to 7, wherein the temperature at which the film is immersed in a non-solvent bath is from -5 to 40°C, preferably from 0 to 30°C.

9. A method according to any one of claims 1 to 8, wherein the freezing point of the combination of the first solvent and second solvent is from 0 to 80°C, preferably from 0 to 70°C, more preferably from 10 to 60°C, and even more preferably from 25 to 60°C.

10. A method according to any one of claims 1 to 9, wherein the temperature of the solution in the co-casting step is from 40 to 120°C, preferably from 40 to 100°C, even more preferably from 50 to 90°C.

11. A solution comprising at least one fluoropolymer, a first solvent and a second solvent, wherein the combination of the first solvent and second solvent has a freezing point higher than or equal to 0°C.

12. The solution according to claim 11, wherein the weight ratio of the first solvent to the second solvent is from 9:1 to 3:7, preferably from 9:1 to 4:6, even more preferably from 8:2 to 5:5.

13. The solution according to any one of claims 11 to 12, wherein the first solvent is chosen among polar aprotic solvents having a freezing point lower than 40°C, preferably the first solvent is chosen among dimethyl sulfoxide, N-methyl-2-pyrrolidone, acetonitrile, dimethylformamide, sulfolane, 3-methylsulfolane, ethyl isopropyl sulfone, or a combination thereof, even more preferably the first solvent is dimethyl sulfoxide; and/or wherein the second solvent is chosen among polar aprotic solvents having a freezing point higher than 40°C, preferably the second solvent is chosen among methylsulfonylmethane, diphenyl sulfone, bisphenol A sulfone, or a combination thereof, even more preferably the second solvent is methylsulfonylmethane.

14. A porous membrane obtainable by the method according to any one of claims 1 to 10.

15. Use of the porous membrane according to claim 14 for water treatment.
